# EUROPEAN PATENT SPECIFICATION

(11) **EP 3 624 422 B1**
(45) Date of publication and mention of the grant of the patent: **10.01.2024**
(21) Application number: 18382667.6
(22) Date of filing: 16.09.2018
(51) Int. Cl.: G06F 11/34, G09B 5/00, G06Q 30/0601, G06Q 50/00, H04L 67/50

(54) **METHOD OF SENDING RECOMMENDATION NOTIFICATIONS TO USER GROUPS OF A WEB CONTENT MANAGER AND OF ONE OR MORE SECONDARY WEB SERVICES**
VERFAHREN ZUM SENDEN VON EMPFEHLUNGSBENACHRICHTIGUNGEN AN BENUTZERGRUPPEN EINES WEB-INHALTSMANAGERS UND EINES ODER MEHRERER SEKUNDÄRER WEBDIENSTE
PROCÉDÉ PERMETTANT D'ENVOYER DES NOTIFICATIONS DE RECOMMANDATION À DES GROUPES D'UTILISATEURS D'UN GESTIONNAIRE DE CONTENU WEB ET D'UN OU PLUSIEURS SERVICES WEB SECONDAIRES

(43) Date of publication of application: 18.03.2020
(73) Proprietor: Universidad Internacional de La Rioja (UNIR), 26006 Logroño (La Rioja) (ES)
(72) Inventor: Burgos Solans, Daniel, 26006 Logroño (La Rioja) (ES); Corbi Bellot, Alberto, 26006 Logroño (La Rioja) (ES)
(74) Representative: TRBL Intellectual Property

(56) References cited:
- EUGENIO GIL ET AL: "Legal Issues Concerning P2P Exchange of Educational Materials and Their Impact on E-Learning Multi-Agent Systems", INTERNATIONAL JOURNAL OF INTERACTIVE MULTIMEDIA AND ARTIFICIAL INTELLIGENCE, vol. 2, no. 2, 1 June 2013 (2013-06-01), page 73, XP055561050, DOI: 10.9781/ijimai.2013.2211
- Abelardo Pardo ET AL: "A Visual Analytics Method for Score Estimation in Learning Courses LN4LD (learning Networks for Learning design" View project Scaling the Provision of Personalised Learning Support Actions to Large Student Cohorts View project", ArticleinJournal of Universal Computer Science ., 1 January 2015 (2015-01-01), XP055558650, Retrieved from the Internet: URL:https://www.researchgate.net/profile/A belardo_Pardo/publication/273144408_A_Visu al_Analytics_Method_for_Score_Estimation_i n_Learning_Courses/links/54fa648a0cf23e66f 0318dc1/A-Visual-Analytics-Method-for-Scor e-Estimation-in-Learning-Courses.pdf [retrieved on 2019-02-19]
- DE-LA-FUENTE-VALENTIN LUIS ET AL: "A4Learning -- A Case Study to Improve the User Performance: Alumni Alike Activity Analytics to Self-Assess Personal Progress", 2014 IEEE 14TH INTERNATIONAL CONFERENCE ON ADVANCED LEARNING TECHNOLOGIES, IEEE, 7 July 2014 (2014-07-07), pages 360-362, XP032647094, DOI: 10.1109/ICALT.2014.107 [retrieved on 2014-09-17]
- Daniel Burgos: "L.I.M.E. A recommendation model for informal and formal learning, engaged", International Journal of Interactive Multimedia and Artificial Intelligence, vol. 2, no. 2, 1 January 2013 (2013-01-01) , page 73, XP055561050, DOI: 10.9781/ijimai.2013.2211
- Unknown: "API", , 5 September 2018 (2018-09-05), pages 1-3, XP093025450, Retrieved from the Internet: URL:https://en.wikipedia.org/w/index.php?t itle=API&oldid=858103304 [retrieved on 2023-02-20]
- Unknown: "Information hiding", , 13 August 2018 (2018-08-13), pages 1-2, XP093025637, Retrieved from the Internet: URL:https://en.wikipedia.org/w/index.php?t itle=Information_hiding&oldid=854733893 [retrieved on 2023-02-20]

## Description

### FIELD OF THE INVENTION

The present invention is comprised in the field of information technologies, and specifically in the field of communication networks for communication between users over the Internet. More specifically, the invention relates to a system and a method of managing and sending recommendation notifications made to user groups within digital platforms, such as social media, security applications, buying/selling over the Internet, and particularly but without limitation, in the context of online educational platforms.

### BACKGROUND OF THE INVENTION

Internet social media are an effective tool for communication and establishing a connection among users, and they furthermore allow said users to interpret different roles in the mentioned media, aimed at given activity segments or user communities. In the field of education, for example, the members of a social media website can be students, teachers, employees, administration personnel, academic directors, financial officers, etc., who show a given attitude according to the context and the purpose of their contribution or their activity status.

In the context of an educational social media website each user can, for example, ask a question, answer a question, start an activity, follow another activity, discuss a classmate's work, evaluate another user's work, browse the Internet, take a scheduled test, participate in a videoconference with the teacher of a course, and so on out of a long list of possible activities. In said activities, the user can be proactive, reactive, passive, a consumer, a producer, a distributor, and show many other attitudes.

Given the wide range of activities that students and users can generally perform on online educational platforms, it is difficult to determine which of said activities result in a more widespread use or assimilation of the topics or content taught in said platforms. In fact, various educational theories maintain that the student is not completely aware of what he or she is actually learning in complex settings of this type, and even when the student controls his or her own progress, he or she may get the wrong idea about the skills acquired. This entails a potential mistaken assessment of the actual learning progress and the results associated with this learning progress, which in practice is a limitation with respect to the potential utilization of the content generated in educational social media.

As a theoretical solution to this limitation, conventional educational techniques comprise generating activity guides that allow students to improve their performance, for example through the use of metacognitive experiences. The concept of metacognition refers to the capability of people to reflect on their thinking processes and the manner in which they learn. As a result, people can know and regulate their own basic mental processes involved in cognition, and therefore, in learning the knowledge they are taught.

Other theoretical approaches, however, are based on techniques for making recommendations to users, such that said users decide on their schedules depending on common or custom mentoring. This approach is also used in commercial-type applications, such as selling books or music, where various online recommender systems which allow improving the content and product selection experience are known. The recommendations that are sent are usually considered a function of various inputs based on evidence such as related content, interaction times, preferences, behaviours, user profiles, or other similar events. These inputs are therefore the result of monitoring user activities during use of the online platform.

The success of known recommendation systems has also inspired the study and development of related systems for online educational platforms, also known as e-learning platforms. Nevertheless, unlike commercial scenarios, where recommendation systems have already been implemented with considerable success, the educational recommendation itself does not always assure a favourable result, but rather said result largely depends on the interpretation that the user makes of it, and on the specific relationship said user has with other users and his or her evaluators or tutors. This functional difference therefore means that on a technical level, commercial recommenders do not have a direct application in e-learning platforms.

Additionally, in models and technical implementations of e-learning platforms (commonly known as learning management systems or LMS), there is an apparent lack of connection between formal-type activities (for example, exams) and informal-type activities (for example, participation in forums or social media). This also negatively affects the suitable management and sending of recommendation notifications to users. Furthermore, existing LMSs primarily focus on establishing sets of learning units and objects, as well as tests and resources such as discussion forums, personal blogs, or messaging. They do not, therefore, deploy all the learning potential arising from the interrelation between the LMS, social media, and other external sources.

Examples of the above-referred approaches within the prior art are, for example, the research articles by D. Burgos ("L.I.M.E. A recommendation model for informal and formal learning, engaged", in International Journal of Artificial Intelligence and Interactive Multimedia, Vol. 2, no. 2, 2013); A. Pardo et al. ("A Visual Analytics Method for Score Estimation in Learning Courses", in Journal of Universal Computer Science, vol. 21, no. 1 2015, 134-155), and L. de la Fuente et al. ("A4Learning: A Case Study to Improve the User Performance: Alumni Alike Activity Analytics to Self-Assess Personal Progress", in 2014 IEEE 14th International Conference on Advanced Learning Technologies).

However, the main technical problem of the above LMSs, and generally of any web content manager (or CMS, "content management system") within this technical field, is that they lack tools for integrating different additional web services (such as forums, blogs, messaging, or social media) in their hardware and software architecture with which they can be associated and act as "secondary" information sources, thereby preventing the data generated by these sources from being able to be utilized for integrally tracing user behaviour and establishing precise recommendations based on said sources. In this sense, a primary limitation when integrating the web services configuring a CMS with the web services integrating the secondary sources is that these sources belong to a third party, which prevents accessing the information generated by the user upon interacting with said sources, and integrating it with the proprietary information generated in the CMS.

It would therefore be desirable to develop new recommendation systems that can be integrated in known CMSs or LMSs, which technically improve the capabilities of analysing user activities, and which can generate improved recommendations with respect to the solutions existing on the market. It is thereby possible to send to users electronic notifications which aggregate both proprietary information and non-proprietary information (that belongs to a third party), and which allow analysing it in a unified manner, for example, to send recommendations to users depending on his or her activities in any of them.

The present invention seeks to meet the mentioned need by means of a novel system and method of sending notifications in proprietary and non-proprietary web services, which takes into account factors and particularities described in the preceding paragraphs and allows providing adaptive mentoring to users as a result of the use of configurable interaction rules. In said system, based on the learning in CMS and in one or more secondary web services (for example, social media, forums, messaging applications), users interact with the system and with one another and receive guides and recommendations in a tailored manner.

As mentioned, the present invention preferably applies in the field of education, where it is common for users to manage a primary e-learning platform, combined with discussion forums and tutorials on social media. Nevertheless, the proposed system and method can likewise be applied, without limitation, to other sectors such as that of companies with groups of employees, groups of clients, evaluation of public services, private messaging, advertising services, and generally to any field where it is necessary to analyse the performance of tasks or activities between users of different groups when they have to do them, to the extent that they use a primary proprietary CMS, in cooperation with one or more non-proprietary web services.

### BRIEF DESCRIPTION OF THE INVENTION

A primary object of the present invention is therefore to provide a technical solution that allows sending custom recommendation notifications in content management web services (or CMS), when said services are used in combination with one or more non-proprietary web services acting as secondary information sources.

As a non-limiting embodiment of the invention, said solution is applicable to content management web services in e-learning platforms, based on one or more recommendation rules created by its teachers, associated with given activities performed by the students in said platforms, in addition to other secondary sources that are usually owned by third parties.

In a possible application of the invention adapted to the field of education (that is, where the CMS comprises a LMS), by means of generating and sending custom recommendation notifications at specific times of the educational plan, the invention allows improving the assimilation of content by the students, as well as guiding them in their learning processes in a tailored manner adapted to their needs as a result of the aggregation and joint analysis of the proprietary information with the non-proprietary information. The invention thereby allows solving the technical problem of managing educational content with respect to specific activities of the students in a reactive and flexible manner with respect to the performance of said activities, for the purpose of providing support, making corrections, generating learning synergies, etc.

In this sense, the system of the invention offers support to students by means of generating and sending recommendations that can be automated and which are custom-configured by teachers, according to one or more activity patterns in the learning environment. The objective of the system is to therefore increase the level of knowledge that the student has concerning his or her own academic situation in the course, thereby enhancing his or her own personal reflection on his or her progress as a means to improve performance and learning results. At the same time, the invention provides an integrated display of the subject which allows the teacher and/or tutor to know the progress of the class and to be able to make the right decisions for better progression of their students. It is therefore a system that supports the student and the academic world in search of a common objective.

The mentioned object of the invention is preferably achieved by means of a system of managing and sending recommendations to user groups in online educational platforms, comprising one or more computing means configured by means of hardware and software for hosting web services, wherein said web services comprise at least:
- One content manager (or CMS, content management system), configured with different activities that can be performed by the users, and with one or more recording means for recording main activity records and/or results associated with the performance of activities performed by said users.
- One web platform for managing and sending recommendations to users.
- One or more web communication means for communicating with secondary data sources, configured for recording secondary user activity records.

Advantageously, the recommendation web platform of the system is configured with:
- A calculation module configured for reading and vectorising the user activity records, and for generating one or more recommendations for said users on the basis of one or more previously defined recommendation rules.
- A display module configured for reading the recommendation rules, the generated recommendations, the activity records, and/or the results obtained by the users, and showing graphical representations of said information.

The system of the invention therefore constitutes a tool fundamentally designed for teachers and for students of educational courses that are taught periodically and in which the activity of the student leaves an electronic trace that can be monitored. The tool allows vectorising said trace and establishing a series of recommendation rules in the form of one or more threshold values established by the teacher which, should they be reached, will generate the relevant recommendations for the students.

In a preferred embodiment of the invention, the evaluation web platform comprises a database for storing and transforming the information corresponding to the records or to the results of the activities of the users.

An object of the invention relates to a method of managing and sendin recommendations to groups of users of a web-based content manager system, CMS, according to independent claim 1. Further embodiments of the method are provided in dependent claims 2-6.

### DESCRIPTION OF THE DRAWINGS

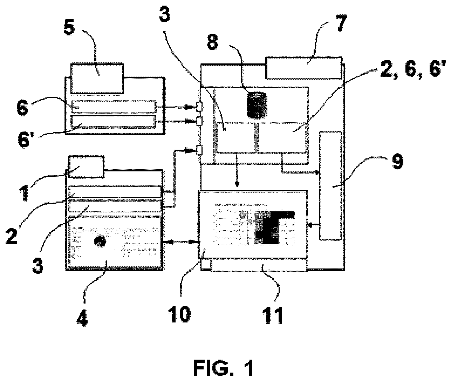

Figure 1 shows an illustrative and non-limiting diagram of the primary elements of the system of the invention in a preferred embodiment thereof.

### REFERENCE NUMBERS USED IN THE DRAWINGS

For the purpose of helping to better understand the technical features of the invention, Figure 1 is accompanied by a series of reference numbers in which the following has been depicted with an illustrative and non-limiting character:

| | |
|---|---|
| (1) | Content management module, CMS, LMS |
| (2) | User activity records |
| (3) | User activity results |
| (4) | Content management module user interfaces |
| (5) | Secondary data sources |
| (6, 6') | Secondary activity records |
| (7) | Recommendation web platform for users |
| (8) | Database |
| (9) | Calculation module |
| (10) | Display module |
| (11) | Recommendation web platform user interface |

### DETAILED DESCRIPTION OF A PREFERRED EMBODIMENT OF THE INVENTION

A detailed description of the invention relating to a preferred embodiment thereof shown in Figure 1 is provided below. As shown in said figure, the invention preferably comprises a content management module (1) (or CMS, or LMS in educational applications, Learning Management System), preferably conceived as one or more web services configured for providing the primary data source to the activity analysis and evaluation system. In educational applications, said CMS (1) will comprise different activities that can be performed by the students, such as for example, exercises, activities, content review, skill tests, discussion forums with students or teachers, etc. By performing the mentioned activities, the CMS (1) will generate a plurality of activity records (2) and/or results (3) associated with said activity, for example, according to the performance of the students. Additionally, the CMS (1) will be preferably configured with one or more user interfaces (4), configured with the content and information to be shown to the students whether for informative, educational, tracking, or evaluation purposes.

Although there is a direct relationship between the activity of a student in the CMS (1) and his or her achievements obtained, the capacity of known educational platforms is generally limited in relation to capturing all the activity of the student. In fact, a large part of the educational and learning activity of the student takes place outside of said CMS (1), so if the analysis is limited to said CMS (1) information that may possibly be very valuable may be discarded. For example, a number of studies highlight the value of social media in learning and the predictive value of the traces generated in said media.

For the purpose of increasing independence with respect to the CMS (1), the system of the invention is additionally configured as a tool capable of being integrated with other web services, as shown in Figure 1. The system can therefore use one or more secondary data sources (5) (configured as one or more non-proprietary web services), which will also constitute the input information to be evaluated by means of one or more secondary activity records (6, 6'). For example, it is possible to implement an integration module through application programming interfaces (APIs), capturing data from social media such as Twitter or Facebook, or to integrate information from questionnaires conducted with tools such as Google Forms or SurveyMonkey. Said APIs mediate the exchange of information between the CMS (1) and the secondary web services (5) through request/response-type messages via hypertext transfer protocol (HTTP). The information generated by users in the secondary web services (5) can thereby be requested and received by the notification web service (7) of the CMS (1) so that it can be aggregated to the information generated in the latter.

The system thereby essentially proposes a notification web service (7) that can be integrated as part of the CMS (1) and with the different secondary data sources (5) for capturing user activities in proprietary and non-proprietary sources, and analysing them for sending electronic notifications (for example, recommendation notifications). Said notification web service (7) is therefore configured for classifying the activities performed by students during their use of the CMS (1) and/or the secondary sources (5), analysing said activities, and generating recommendations for users based on one or more preestablished criteria or recommendation rules (for example, with criteria established by the teachers in e-learning platforms web). The notification web service (7) also allows teachers to visually show and manage both the mentioned recommendation criteria and the recommendations generated for each user, putting them in the context of the obtained results (3). This allows suitable tracking of the student's learning, as well as analysis of the efficacy of the applied recommendation criteria.

In the mentioned scope of e-learning, the system and the method implemented by the invention are preferably performed by means of using four basic educational functionalities relating to learning, interaction, mentoring, and evaluation, which are implemented by the notification web service (7). On a theoretical level, said functional framework is known as the LIME (Learning, Interaction, Mentoring, Evaluation) model. Based on this functional division, the system of the invention allows classifying the different activities of users and vectorising them, defining a plurality of numerical estimators which allow providing one or more custom schedule recommendations for each user.

L activities (relating to learning) thereby refer to the specific actions performed by each student. In turn, I activities (relating to interaction) refer to the contributions of each student in activities performed in relation to other students. Likewise, M-type activities (relating to mentoring) refer to the contributions of users whose role is one of teacher, tutor, expert, etc., in the system. Finally, E-type activities (relating to evaluation) refer to the evaluation which is performed across all the activities of the other three categories.

Through the four mentioned categories, it is possible to study the behaviour and performance of a student also depending on the context thereof within the educational social media, and more specifically the CMS (1) used and/or the secondary sources (5), including parameters such as reputation, confidence, and other impact factors in learning the content that is taught. To conduct said study, the users with a teacher/evaluator profile may define over this structure, through the notification web service (7), a learning strategy that will take various elements into account:
- Configuration of activities: this corresponds with a formal use scenario (for example, exercises in subjects or exams through the CMS (1)) or informal use scenario (for example, secondary social media (5) and/or discussion forums of the CMS (1)), together with the conditions parametrising the user activities to be measured. Teachers can thereby categorize given events (for example, performing a given exercise via CMS (1), or publishing a comment by the student in a secondary social media website (5)) as activities susceptible to generating one or more recommendation notifications. Said categorization of activities will be done through the notification web service (7), based on the activity records (2) of the students in the CMS (1) and/or the records (6, 6') of the secondary sources (5).
- Assignment of categories: The aforementioned categories (learning, interaction, mentoring, and evaluation) will preferably be used, which categories will be assigned to the activities configured in the preceding point. Each of the categories can optionally be associated with a percentage weight that will define the specific importance for a specific learning scenario. As mentioned, the evaluation category will be defined and applied across the three categories.
- Input scores: These are specific factors or values (for example, actions of the student, behaviours, marks, etc.) weighting the categories, optionally also with one or more assigned relative weights.

As mentioned, the implementation based on a primary notification web service (7) allows being integrated in heterogeneous learning environments, such as cloud applications or other work contexts. In other words, the system of the invention allows analysing the input data of any existing CMS (1) or any learning platform. In this sense, the notification web service (7) is preferably configured with a database (8) for storing and transforming the information corresponding to the activity records (2, 6, 6') or to the results (3) of the students.

The notification web service (7) is also configured with a calculation module (9) which allows reading the activity records (2, 6, 6') and generating one or more recommendation notifications for users (for example, students of an e-learning platform) based on one or more rules defined by the teachers. Said processing is preferably performed periodically, so the display thereof will be updated with each new piece of information received. The update frequency can be adjusted (for example, once a day) for the adaptation thereof to the needs of different educational scenarios.

On the other hand, the notification web service (7) is equipped with a display module (10) configured for reading the activity records (2, 6, 6') and/or the results (3) of the groups of students, generating information for the visual representation of the defined rules and the recommendations generated for users. The displays that are produced can also be used to feed the user interfaces (4) of the CMS (1) (for example, through one or more widgets). The obtained results and their corresponding displays can thereby be consulted in different formats both by teachers or tutors (through web access to the display module (10) by means of one or more interfaces (11) configured in the notification web service (7)) and by students through the interfaces (4) of CMS (1) itself. Therefore, there will be two primary views of the recommendation system, namely, the view of the students (implemented in the graphic interface (4) of the CMS (1)) and the view of the teachers, implemented in the interfaces (11) of the display module (10). In the view of the students, said students receive their recommendations automatically, as they are generated following the rules configured by the teachers. On the other hand, in the view of the teacher, said teacher plans the milestones or stages of the subject and defines a series of rules which, based on the actions or activities performed by the student, will result in the recommendations shown in the interface (4) of the CMS (1).

The described system additionally comprises one or more computing means configured by means of hardware and software for hosting the web services corresponding to the CMS (1) and to the recommendation web service (7), as well as one or more communication means for communicating (for example over the Internet) with the different secondary data sources (5) used.

Having referred to the primary elements of the system of the invention, the steps implemented by the method carried out by said system will be described below. In an example oriented towards an e-learning web platform, each subject or educational content will comprise a learning scenario which describes the natural or expected learning process for a subject or content. For example, it is possible to divide said scenario into one or more learning milestones or activities. Each activity therefore describes the requirements in the different stages of learning since, for example, the effort to be made by or required of the student in the first week of the course is not the same as what is required of said student when the course is at its halfway mark or coming to an end. Likewise, the recommendations each student receives must be in accordance with his or her performance and the point the course or the program with educational content being followed is at.

The configuration of the activities by means of the notification web service (7) comprises at least the following steps implemented by the calculation module (9) of the system:
a) Defining one or more actions associated with at least one main record (2) or secondary record (6, 6') obtained from the user using the system, and vectorising it in one or more vector components. Furthermore, said actions are optionally associated with one or more classification categories (for example, the four categories of the LIME model), and the possibility of activating or deactivating inputs, indicating the category to which an action is considered to belong, and/or classifying an action as an evaluable action or not, is also optionally offered.
b) Defining one or more recommendation rules based on at least one threshold value of the vector components associated with the actions defined in step a).
c) Configuring one or more recommendations associated with compliance with the configuration rules upon reaching one or more of the threshold values defined in step b) above.
d) Sending the recommendations generated in step c) above that comply with the defined rules to one or more users during their use of the system.

In a preferred embodiment of the invention, the notification web service (7) will furthermore be configured for allowing the creation, duplication, edition, and elimination of the defined rules.

As mentioned, notifications are offered to users based on the rules created, with said recommendations being recommendation notifications for students in an e-learning platform, for example. The set of rules applied to a student allows determining a general performance index for the student according to the proposed scenario. Likewise, in additional embodiments of the invention the recommendations generated for students may comprise one or more clustering levels, for example, including multiple courses, classes, or subgroups thereof. In other embodiments of the invention, it is also possible to calculate and store one or more recommendation rules such that the teacher can select different graphical displays associated with said recommendations or the students receiving said recommendations.

## Claims

1. Method of sending recommendation notifications to groups of users of a web-based content manager system, CMS (1), comprising one or more primary web services, and of one or more third-party secondary web services (5) connected to said CMS (1) over the Internet; wherein the CMS (1) is configured with a database (8) for recording:
- at least one main user activity record (2) associated with activities that are performed by said users in the CMS (1) through the primary web services, and
- at least one or more secondary user activity records (6, 6') associated with activities that are performed by users outside of the CMS (1) through said third-party secondary web services (5); and
wherein the third-party secondary web services belong to a third party, which prevents accessing the secondary user activity records by the CMS (1);
wherein said method comprises performing the following steps, through a notification web service (7) comprised in the CMS (1) and communicated with the third-party secondary web services (5) by means of a plurality of APIs
a) obtaining the main user activity record (2) of the CMS (1) and obtaining the secondary user activity records (6, 6') through API-mediated request/response-type messages via hypertext transfer protocol (HTTP), between the notification web service (7) and the third-party secondary web services (5);
b) reading the main user activity record (2) and the secondary user activity records (6, 6'), storing and numerically transforming the information corresponding to said user activity records (2, 6, 6') and vectorising them through a calculation module (9) of the notification web service (7) and the database (8) of the CMS (1);
c) defining one or more recommendation rules based on a selection of at least one set of numerical threshold values for one or more vector components of the vectorised user activity records obtained in step b);
d) configuring in the notification web service (7) one or more recommendation notifications associated with compliance with the recommendation rules when the one or more vector components of the vectorised user activity records obtained in step b) reach one or more of the threshold values defined in step c);
e) sending the recommendation notifications generated in step d) to one or more of the users through computing means equipped with a display module (10), and configured with one or more user interfaces (4, 11) for reading said notifications, the recommendation rules defined in step c), and/or the user activity records (2, 6, 6') obtained by the users, and showing graphical representations of said information.

2. Method according to the preceding claim, wherein the display module (10) is connected to the user interface (4) of the CMS (1) through one or more widgets.

3. Method according to any of the preceding claims, wherein the recommendation web service (7) is configured for being updated with a frequency that can be selected by the user through the CMS (1).

4. Method according to any of the preceding claims, wherein the actions of the users are associated with one or more classification categories.

5. Method according to the preceding claim, wherein the classification categories comprise the categories of a LIME-type model.

6. Method according to any of the preceding claims, wherein the generated recommendations comprise one or more user clustering levels, such that the user can select different graphical displays associated with said recommendations.

## Patentansprüche

1. Verfahren zum Senden von Empfehlungsbenachrichtigungen an Gruppen von Benutzern eines webbasierten Inhaltsmanagementsystems, CMS (1), das einen oder mehrere primäre Webdienste und einen oder mehrere sekundäre Webdienste (5) von Drittanbietern umfasst, die über das Internet mit dem CMS (1) verbunden sind;
wobei das CMS (1) mit einer Datenbank (8) zum Aufzeichnen von Folgendem ausgebildet ist:
- mindestens einer Hauptbenutzeraktivitätsaufzeichnung (2), die mit Aktivitäten assoziiert ist, die von den Benutzern im CMS (1) über die primären Webdienste durchgeführt werden, und
- mindestens einen oder mehrere Sekundärbenutzeraktivitätsaufzeichnungen (6, 6'), die mit Aktivitäten assoziiert sind, die von Benutzern außerhalb des CMS (1) über die sekundären Webdienste (5) von Drittanbietern durchgeführt werden; und
wobei die sekundären Webdienste von Drittanbietern zu einem Drittanbieter gehören, der den Zugriff auf die Sekundärbenutzeraktivitätsaufzeichnungen durch das CMS (1) verhindert;
wobei das Verfahren das Durchführen der folgenden Schritte über einen Benachrichtigungs-Webdienst (7) umfasst, der von dem CMS (1) umfasst wird und mit den sekundären Webdiensten (5) von Drittanbietern über eine Vielzahl von API kommuniziert:
a) Erhalten der Hauptbenutzeraktivitätsaufzeichnung (2) des CMS (1) und Erhalten der Sekundärbenutzeraktivitätsaufzeichnungen (6, 6') durch APIvermittelte Nachrichten vom Typ Anfrage/Antwort über das Hypertext-Übertragungsprotokoll (HTTP), zwischen dem Benachrichtigungs-Webdienst (7) und den sekundären Webdiensten (5) von Drittanbietern;
b) Lesen der Hauptbenutzeraktivitätsaufzeichnung (2) und der Sekundärbenutzeraktivitätsaufzeichnungen (6, 6'), Speichern und numerisches Umwandeln der den Benutzeraktivitätsaufzeichnungen (2, 6, 6') entsprechenden Informationen und deren Vektorisierung durch ein Berechnungsmodul (9) des Benachrichtigungs-Webdienstes (7) und die Datenbank (8) des CMS (1);
c) Definieren einer oder mehrerer Empfehlungsregeln auf der Grundlage einer Auswahl von mindestens einem Satz numerischer Schwellenwerte für eine oder mehrere Vektorkomponenten der in Schritt b) erhaltenen vektorisierten Benutzeraktivitätsaufzeichnungen;
d) Konfigurieren einer oder mehrerer Empfehlungsbenachrichtigungen in dem Benachrichtigungs-Webdienst (7), die mit der Einhaltung der Empfehlungsregeln assoziiert sind, wenn die eine oder mehrere Vektorkomponenten der in Schritt b) erhaltenen vektorisierten Benutzeraktivitätsaufzeichnungen einen oder mehrere der in Schritt c) definierten Schwellenwerte erreichen;
e) Senden der in Schritt d) erzeugten Empfehlungsbenachrichtigungen an einen oder mehrere Benutzer über Rechnermittel, die mit einem Anzeigemodul (10) ausgestattet und mit einer oder mehreren Benutzerschnittstellen (4, 11) ausgebildet sind, um die Benachrichtigungen, die in Schritt c) definierten Empfehlungsregeln und/oder die von den Benutzern erhaltenen Benutzeraktivitätsaufzeichnungen (2, 6, 6') zu lesen und grafische Darstellungen der Informationen anzuzeigen.

2. Verfahren nach dem vorhergehenden Anspruch, wobei das Anzeigemodul (10) über ein oder mehrere Widgets mit der Benutzerschnittstelle (4) des CMS (1) verbunden ist.

3. Verfahren nach einem der vorhergehenden Ansprüche, wobei der Empfehlungs-Webdienst (7) ausgebildet ist, um mit einer Frequenz aktualisiert zu werden, die vom Benutzer über das CMS (1) ausgewählt werden kann.

4. Verfahren nach einem der vorhergehenden Ansprüche, wobei die Handlungen der Benutzer mit einer oder mehreren Klassifizierungskategorien assoziiert sind.

5. Verfahren nach dem vorhergehenden Anspruch, wobei die Klassifizierungskategorien die Kategorien eines Modells vom Typ LIME umfassen.

6. Verfahren nach einem der vorhergehenden Ansprüche, wobei die erzeugten Empfehlungen eine oder mehrere Benutzer-Clusterebenen umfassen, so dass der Benutzer verschiedene grafische Anzeigen auswählen kann, die mit den Empfehlungen assoziiert sind.

## Revendications

1. Procédé permettant d'envoyer des notifications de recommandation à des groupes d'utilisateurs d'un système de gestionnaire de contenu basé sur le web, CMS (1), comprenant un ou plusieurs services web primaires et un ou plusieurs services web secondaires de tiers (5) connectés audit CMS (1) sur l'Internet ;
dans lequel le CMS (1) est configuré avec une base de données (8) pour l'enregistrement :
- d'au moins un enregistrement d'activité d'utilisateurs principal (2) associé aux activités effectuées par lesdits utilisateurs dans le CMS (1) par l'intermédiaire des services web primaires, et
- d'au moins un ou plusieurs enregistrements d'activité d'utilisateurs secondaires (6, 6') associés aux activités effectuées par des utilisateurs en dehors du CMS (1) par l'intermédiaire desdits services web secondaires de tiers (5) ; et
dans lequel les services web secondaires de tiers appartiennent à un tiers, ce qui empêche le CMS (1) d'accéder aux enregistrements d'activité d'utilisateurs secondaires ;
dans lequel ledit procédé comprend l'exécution des étapes suivantes, par l'intermédiaire d'un service web de notification (7) compris dans le CMS (1) et communiqué avec les services web secondaires de tiers (5) au moyen d'une pluralité d'API :
a) obtenir l'enregistrement d'activité d'utilisateurs principal (2) du CMS (1) et obtenir les enregistrements d'activité d'utilisateurs secondaires (6, 6') par le biais de messages de type demande/réponse d'API via le protocole de transfert hypertexte (HTTP), entre le service web de notification (7) et les services web secondaires de tiers (5) ;
b) lire l'enregistrement d'activité d'utilisateurs principal (2) et les enregistrements d'activité d'utilisateurs secondaires (6, 6'), stocker et transformer numériquement les informations correspondant auxdits enregistrements d'activité d'utilisateurs (2, 6, 6') et les vectoriser par l'intermédiaire d'un module de calcul (9) du service web de notification (7) et de la base de données (8) du CMS (1) ;
c) définir une ou plusieurs règles de recommandation sur la base d'une sélection d'au moins un ensemble de valeurs seuils numériques pour une ou plusieurs composantes vectorielles des enregistrements d'activité d'utilisateurs vectorisés obtenus à l'étape b) ;
d) configurer dans le service web de notification (7) une ou plusieurs notifications de recommandation associées au respect des règles de recommandation lorsque l'une ou plusieurs composantes vectorielles des enregistrements de l'activité d'utilisateurs vectorisés obtenus à l'étape b) atteignent une ou plusieurs des valeurs seuils définies à l'étape c) ;
e) envoyer les notifications de recommandation générées à l'étape d) à un ou plusieurs des utilisateurs par l'intermédiaire de moyens informatiques équipés d'un module d'affichage (10) et configurés avec une ou plusieurs interfaces d'utilisateur (4, 11) pour lire lesdites notifications, les règles de recommandation définies à l'étape c) et/ou les enregistrements d'activité d'utilisateurs (2, 6, 6') obtenus par les utilisateurs, et afficher des représentations graphiques de ces informations.

2. Procédé selon la revendication précédente, dans lequel le module d'affichage (10) est connecté à l'interface d'utilisateur (4) du CMS (1) par l'intermédiaire d'un ou plusieurs widgets.

3. Procédé selon l'une quelconque des revendications précédentes, dans lequel le service web de recommandation (7) est configuré pour être mis à jour à une fréquence pouvant être sélectionnée par l'utilisateur via le CMS (1).

4. Procédé selon l'une quelconque des revendications précédentes, dans lequel les actions des utilisateurs sont associées à une ou plusieurs catégories de classification.

5. Procédé selon la revendication précédente, dans lequel les catégories de classification comprennent les catégories d'un modèle de type LIME.

6. Procédé selon l'une quelconque des revendications précédentes, dans lequel les recommandations générées comprennent un ou plusieurs niveaux de regroupement d'utilisateurs, de sorte que l'utilisateur peut sélectionner différents affichages graphiques associés auxdites recommandations.
